# EUROPEAN PATENT SPECIFICATION

(11) **EP 3 812 024 B1**
(45) Date of publication and mention of the grant of the patent: **20.08.2025**
(21) Application number: 20152987.2
(22) Date of filing: 21.01.2020
(51) Int. Cl.: B01D 35/147, B01D 35/153, C02F 9/00

(54) **FILTRATION SYSTEM WITH BYPASS AND FILTERING CONFIGURATIONS**
FILTRATIONSSYSTEM MIT BYPASS- UND FILTERKONFIGURATIONEN
SYSTÈME DE FILTRATION DOTÉ DE CONFIGURATIONS DE DÉRIVATION ET DE FILTRAGE

(30) Priority: 25.10.2019 CN 201911024338
(43) Date of publication of application: 28.04.2021
(73) Proprietor: Tianjin Yunda Industry And Trade Co., Ltd., Tianjin 301600 (CN)
(72) Inventor: WEI, Enyu, Tianjin, 301600 (CN)
(74) Representative: Metida

(56) References cited:
- WO-A1-2014/056161
- US-A1- 2018 318 739
- US-A1- 2019 106 333

## Description

### TECHNICAL FIELD

The present disclosure relates to the field of filtration, and more particular to a water filtration system with a bypass configuration and a filtering configuration.

### BACKGROUND

In typical filtration systems, a water inlet valve needs to be closed when an off-platform water purifier and/or the filter core of a filter bottle structure are replaced, which may adversely affect the water supply of a whole building, residence, or area being serviced. When the filter core is replaced, the filter core may need to be disassembled, and the water stored in a filter bottle may need to be poured out; this wastes water and requires a user undertake additional work.

Further, when an off-platform water purifier is installed to provide household drinking water, one or more extra adapters may be required due to variances among commonly used connecting components, for example, when the household water joint is of a direct insertion type or an internal thread type. Therefore, the inconsistency among household water joints increases the difficulty and expense of a filtration system installation. WO 2014/056161 A1 and US 2018/318739 disclose a water filtration system according to prior art.

### SUMMARY

The present disclosure provides a description of systems, components, and methods of operation thereof to address the perceived needs described above, as well as to improve technologies relating to filtration systems.

According to the invention, a water filtration system according to claim 1 is provided.

The connector body may define a main connector body cavity. The connector body may include an annular protrusion disposed at the top of the main connector body cavity and around the central axis. The connector inner core may include a plurality of inner core rotation support protrusions disposed at the top of the inner core around the central axis. The plurality of inner core rotation support protrusions may be at least partially disposed within the annular protrusion. The plurality of inner core rotation support protrusions may define a plurality of inner core rotation support gaps. The connector may be configured to direct water through the plurality of inner core rotation support gaps when the water filtration system is in the bypass configuration.

The connector body may define a main connector body cavity. The connector body may include a plurality of inwardly extending flanges disposed near the bottom of the connector body. The filter may include a plurality of outwardly extending flanges disposed near the top of the filter. The inwardly extending flanges may be configured to engage with the outwardly extending flanges of the filter when the filter is fully mounted in the connector.

The connector body may define a main connector body cavity. The connector body may include a stop element disposed at the top of the main connector body cavity. The stop element may be configured to limit the rotation of the connector inner core within the connector body to between 60 and 120 degrees. The stop element may be configured to limit the rotation of the connector inner core within the connector body to approximately 90 degrees.

The inner core outlet may include a filter tip receiving cavity disposed at a bottom of the connector inner core along the central axis. The bottom of the connector inner core may define a plurality of engagement cavities surrounding the filter tip receiving cavity. The inner core inlet may include inner core inlet exit disposed at a bottom of the connector inner core between at least two of the plurality of engagement cavities.

The filter may include an end cover and a filter tip. The end cover may include an end cover central opening along the central axis, a plurality of end cover engagement protrusions surrounding the end cover central opening, and an end cover inlet disposed between at least two of the end cover protrusions. The filter tip may be at least partially disposed within the end cover central opening.

The filter tip receiving cavity may be configured to receive the filter tip. The plurality of end cover engagement protrusions may be configured to engage with the plurality of engagement cavities. The end cover inlet may be configured to align with the inner core inlet exit when the filter is partially or fully mounted in the connector. An engagement between the plurality of end cover engagement protrusions and the plurality of engagement cavities, respectively, may be configured to enable the rotation of the connector inner core by a rotation of the filter.

The water filtration system may further include an inner core baffle sealing ring and an inner core filter sealing ring. The connector inner core may include an inner core baffle sealing groove and an inner core filter sealing groove. The inner core baffle sealing ring may be at least partially disposed within the inner core baffle sealing groove. The inner core baffle sealing ring may engage with the connector inner core and the connector core baffle to form a first seal. The inner core filter sealing ring may be at least partially disposed within the inner core filter sealing groove. When the filter is fully mounted in the connector, the inner core filter sealing ring may engage with the connector inner core and the filter to form a second seal.

The inner core outlet may include a filter tip receiving cavity around the central axis. The filter may include a filter tip. The filter tip may be disposed within the filter tip receiving cavity when the filter is fully mounted in the connector.

The water filtration system may further include a filter tip outlet upper sealing ring. The filter tip may include a filter tip outlet upper sealing groove. The filter tip outlet upper sealing ring may be at least partially disposed within the filter tip outlet upper sealing groove. The filter tip outlet upper sealing ring may engage with an interior surface of the connector inner core and the filter tip to form a seal when the filter is mounted in the connector.

The water filtration system may further include an inlet quick insertion assembly and an outlet quick insertion assembly. The inlet quick insertion assembly may be configured to be installed within the connector body water inlet. The outlet quick insertion assembly may be configured to be installed within the connector body water outlet. The inlet quick insertion assembly may include a first threaded barb, a first O-ring, a first baffle, and a first quick-connection claw. The outlet quick insertion assembly may include a second threaded barb, a second O-ring, a second baffle, and a second quick-connection claw.

It is to be understood that the descriptions herein are exemplary and explanatory only, and are not restrictive of the invention.

### BRIEF DESCRIPTION OF THE DRAWINGS

The accompanying drawings, which are incorporated into and constitute a part of this specification, illustrate several embodiments and aspects of the methods, systems, and system components described herein and, together with the description, serve to explain the principles of the invention.
Figure is a front view of a filtration system, in accordance with exemplary embodiments.
Figure 1B is a perspective view of a filter of the filtration system, in accordance with exemplary embodiments.
Figure 2 is an exploded view of the filtration system, in accordance with exemplary embodiments.
Figures 3A and 3B are cross-sectional views of a portion of the filtration system in a filtering configuration, in accordance with exemplary embodiments.
Figures 3C and 3D are cross-sectional views of a portion of the filtration system in a bypass configuration, in accordance with exemplary embodiments.
Figure 3E is a perspective cross-sectional view of a portion of the filtration system in the bypass configuration, in accordance with exemplary embodiments.
Figure 4 is a cross-sectional view of the filtration system in the filtering configuration, in accordance with exemplary embodiments.
Figures 5A - 5D are a top view, a perspective underside view, a perspective cross-sectional view, and a perspective view, respectively, of a connector body of the connector of the filtration system, in accordance with exemplary embodiments.
Figures 6A - 6C are a perspective view, a perspective cross-sectional view, and an underside perspective view, respectively of a connector core baffle of the connector, in accordance with exemplary embodiments.
Figures 7A - 7C are a side perspective view, a bottom perspective view, and cross-sectional perspective view, respectively, of a connector inner core of the connector, in accordance with exemplary embodiments.
Figure 7D is a top view of the filtration system with the connector body and other connector elements omitted, in accordance with exemplary embodiments.
Figure 8A is a top perspective view of a filter end cover of the filter of the filtration system, in accordance with exemplary embodiments.
Figure 8B is a cross-sectional view of a filter core of the filter, in accordance with exemplary embodiments.
Figure 8C is a cross-sectional top perspective view of a filter cover body of the filter, in accordance with exemplary embodiments.
Figure 8D is a bottom perspective view of the filter cover body of the filter, in accordance with exemplary embodiments.
Figure 8E is a cross-sectional view of a filter, in accordance with exemplary embodiments.
Figure 9 is an exploded view of a portion of a quick-insertion assembly of the connector, in accordance with exemplary embodiments.

### DETAILED DESCRIPTION

### Filtration System 100 Structure

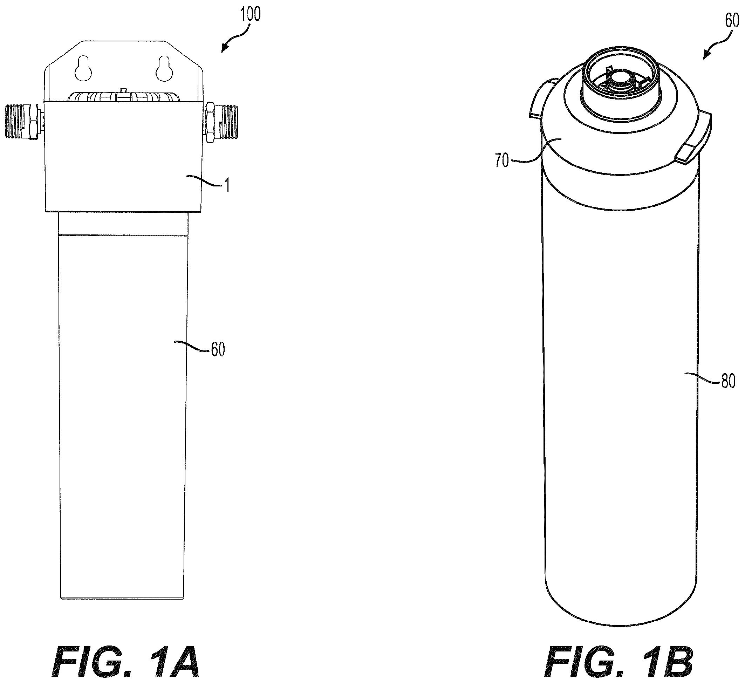

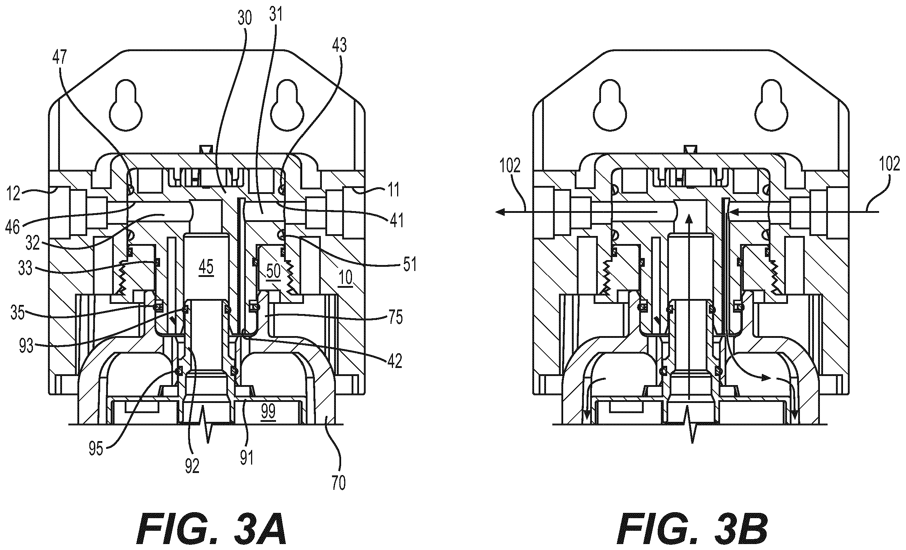

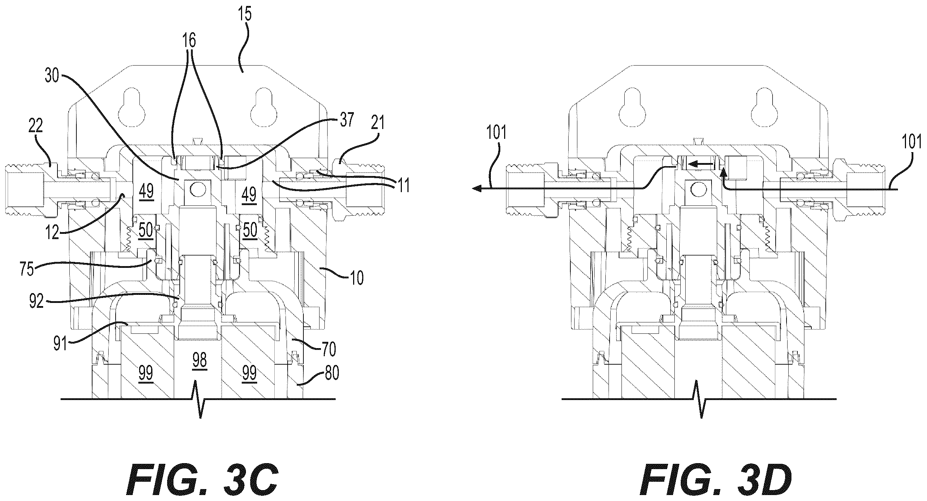

With reference to, FIG. 1A, filtration system 100 with a bypass configuration and a filtering configuration is provided. The filtration system 100 includes connector 1 and filter 60. Filter 60 is mounted in connector 1. As discussed further herein, when filter 60 is fully mounted in connector 1, water flowing through filtration system 100 flows through filter 60 and filtration system 100 may be understood to be in the filtering configuration. FIGS. 3A, 3B, 4, and 8E depict filtration system 100, or portions thereof, in the filtering configuration. When filter 60 is partially mounted in connector 1 or not mounted at all, water flowing through the filtration system 100 does not flow through filter 60, and filtration system 100 may be understood to be in the bypass configuration. FIGS. 3C-3E depict system 100, or portions thereof, in the bypass configuration.

### Connector 1

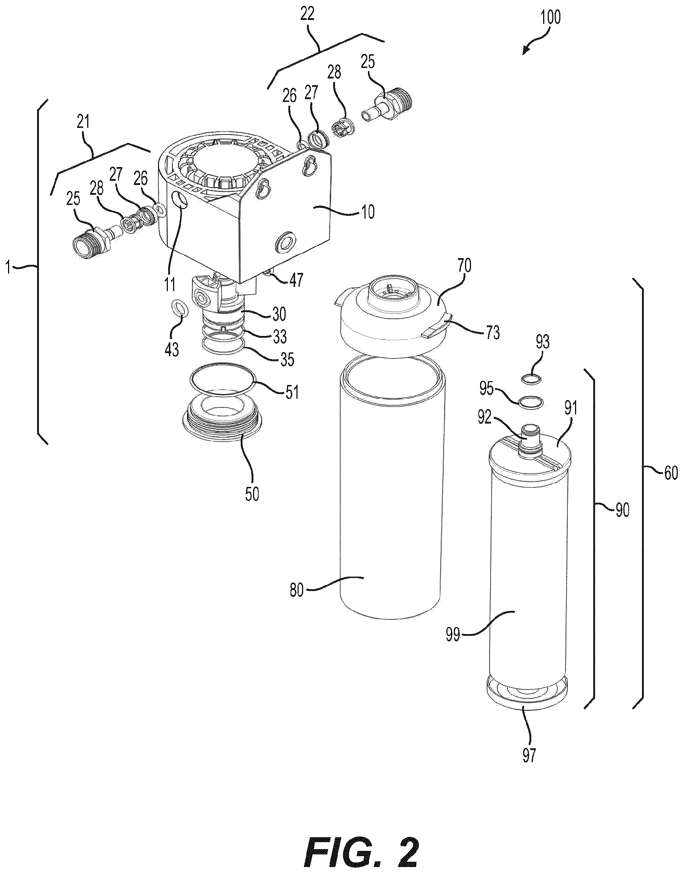

With reference to FIG. 2, connector 1 includes connector body 10, connector inner core 30, and connector core baffle 50, as well as a number of sealing and installation elements.

### Connector body 10

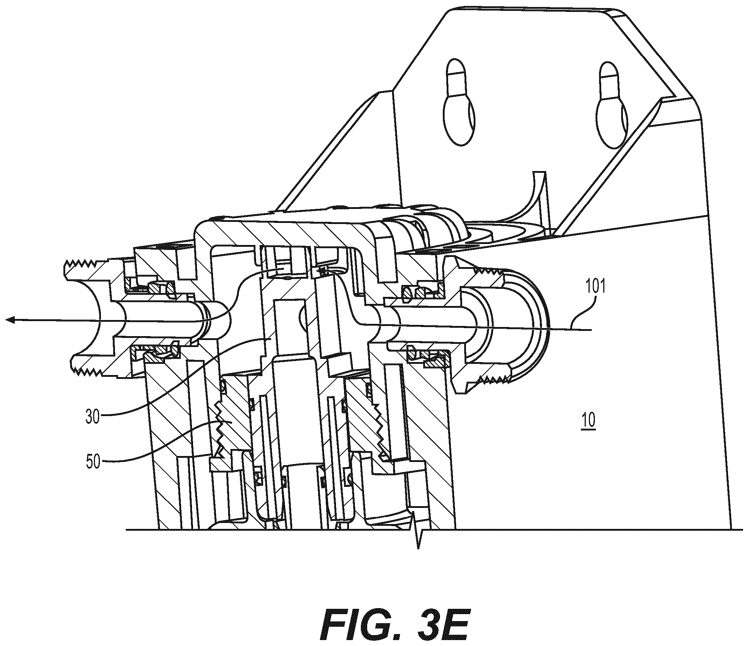

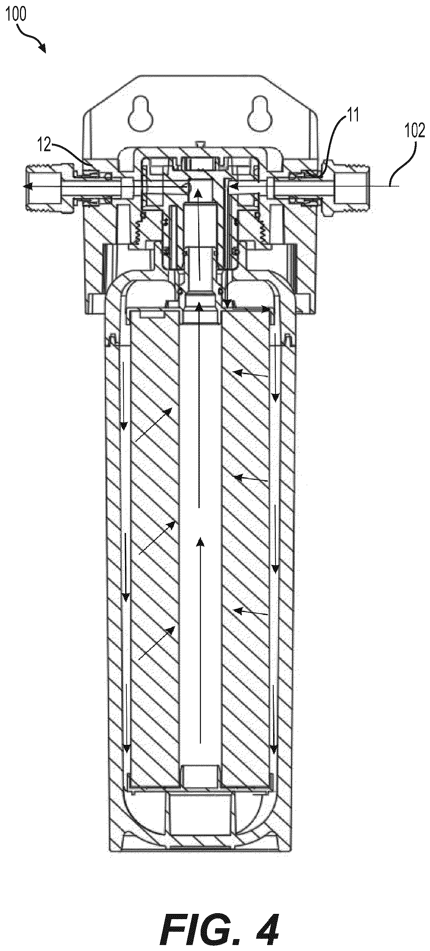

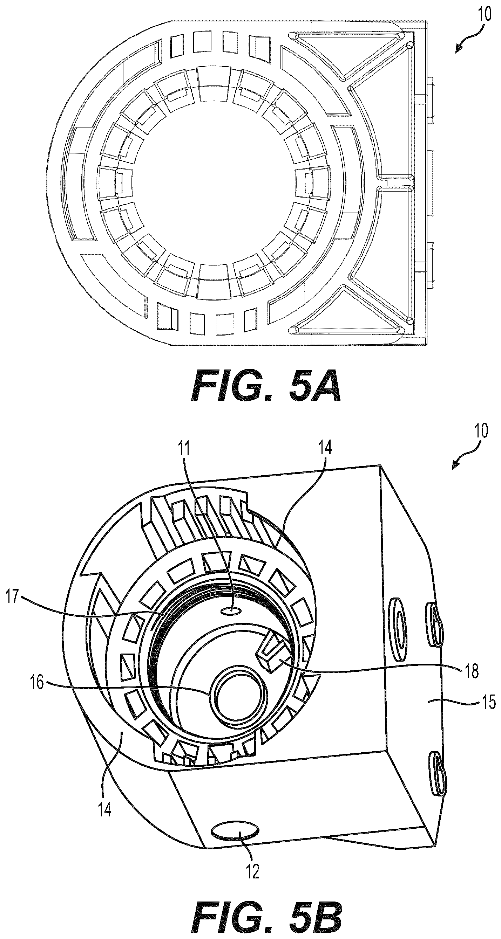

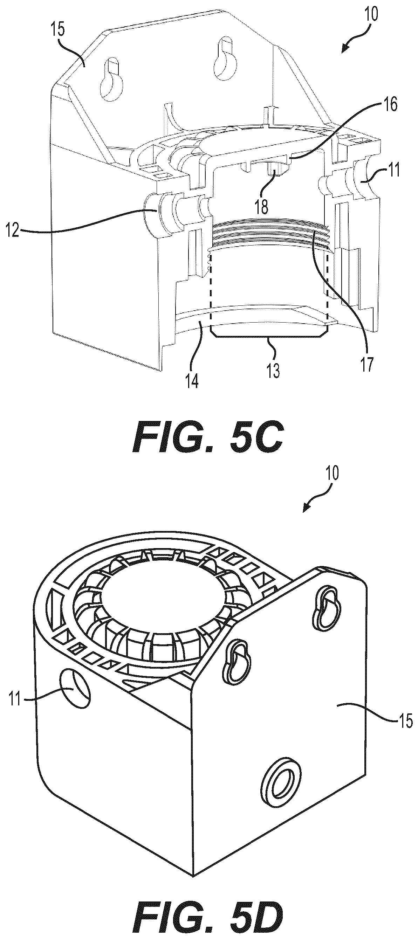

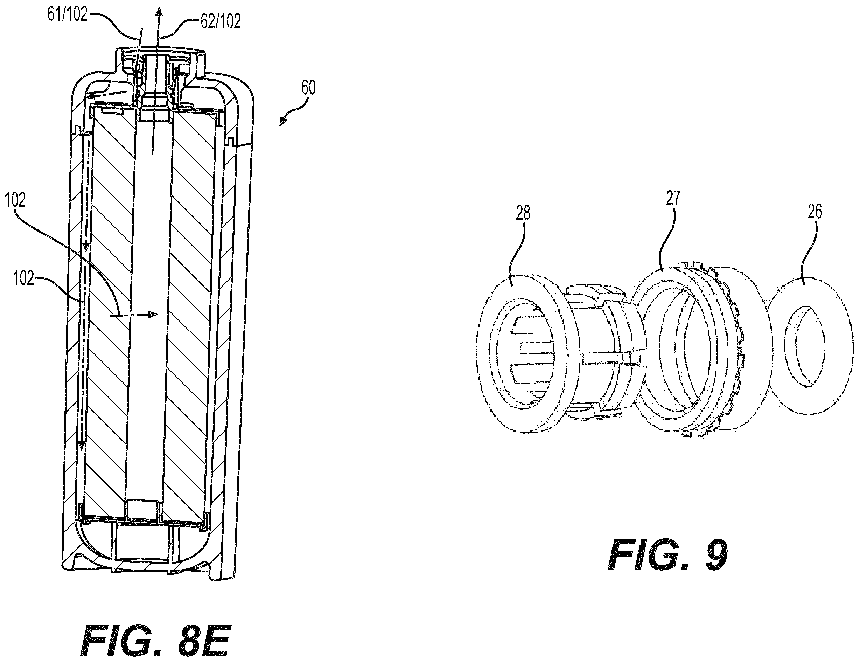

With reference to FIGS. 5A-5D, connector body 10 includes connector body inlet 11 through which water from a water source is received by filtration system 100, and connector body outlet 12 through which filtered or unfiltered water exits filtration system 100. Although the figures of this disclosure depict the right side of connector body 10 as including connector body inlet 11 and the left side of connector body 10 as including connector body outlet 12, the disclosure is not so limited and their positions may be swapped in alternative embodiments. Connector 1 also includes inlet quick insertion assembly 21 and outlet quick insertion assembly 22, which are installed in connector body inlet 11 and connector body outlet 12, respectively. Quick insertion assemblies 21 and 22 are shown exploded in FIGS. 2 and FIG. 9 (in part); and in cross-section in FIGS. 3C, 3D, 3E, and 4. As shown, in some embodiments, each quick insertion assembly 21/22 includes O-ring 26, insertion baffle 27, quick-connection claw 28, and threaded barb 25. The threaded portion of each threaded barb 25 is connected to internally threaded inlet and outlet pipes, respectively, in which system 100 is installed. Where inlet and/or outlet pipes terminate in barbs or already include such connectors, threaded barbs 25 may be omitted.

The back of the connector body 10 includes hanging element 15, which includes one or more mounting holes through which screws or the like may be used to securely mount filtration system 100 for use.

As best viewed in FIGS. 5B and 5C, connector body 10 defines main connector body cavity 13 to which connector body inlet 11 and connector body outlet 12 connect. Adjacent to connector body cavity 13, connector body 10 includes internal threading 17, annular protrusion 16, and stop element 14. Internal threading 17 is configured to engage with external threading 55 of connector core baffle 50.

Annular protrusion 16 surrounds a central axis of connector body 10 (as well as connector 1 and system 100). Annular protrusion 16 is disposed on the top internal surface of connector body 10. Annular protrusion 16 is configured to engage with inner core rotation support protrusions 37 of connector inner core 30. Such engagement supports connector inner core 30 within connector body 10 while permitting its rotation therein.

Stop element 18 is disposed on the top internal surface of connector body 10, preferably external to annular protrusion 16. Stop element 18 is configured to limit the rotation of connector inner core 30 within connector body 10, for example, to an allowable rotation of approximately 90 degrees. In other embodiments, rotation of between 60 and 120 degrees may be permitted.

Connector body 10 also includes a plurality of inwardly extending flanges 14 disposed near the bottom of connector body 10. For example, connector body 10 includes two inwardly extending flanges 14 located along or near the opening of connector body cavity 13. Inwardly extending flanges 14 are configured to engage with outwardly extending flanges 73 of filter 60 and thereby serve to secure filter 60 within connector 1 when mounted, as well as aid in mounting.

### Connector inner core 30

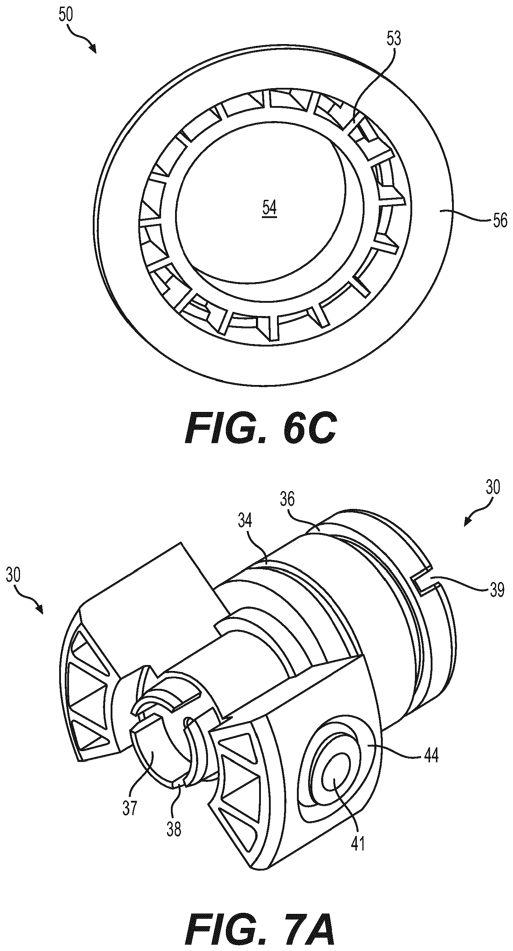

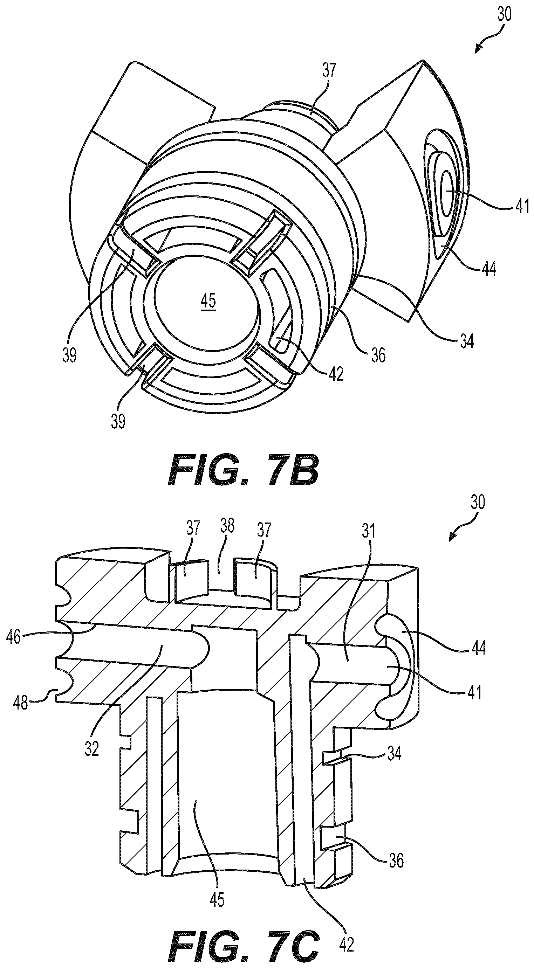

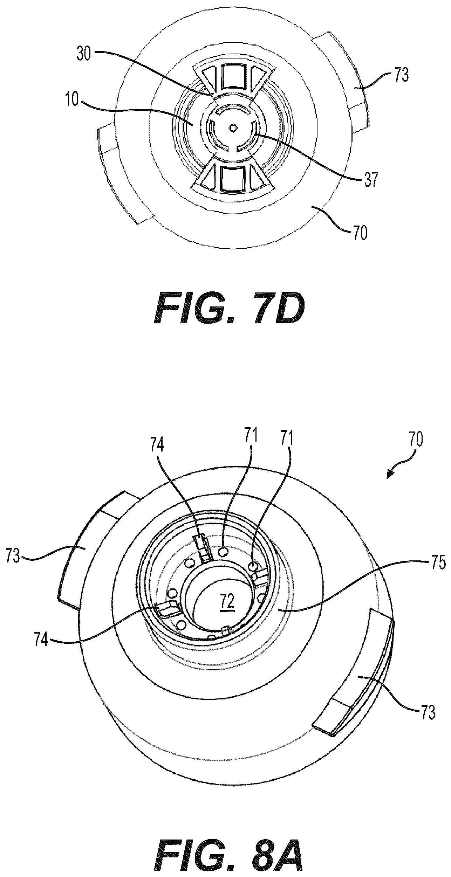

With reference to FIGS. 7A-7C, an embodiment of connector inner core 30 is shown. As may be seen in the cross-section of FIG. 7C, connector inner core 30 includes inner core inlet 31 and inner core outlet 32. Inner core inlet 31 is preferably be L-shaped and includes inner core inlet entrance 41 and inner core inlet exit 42. When filtration system 100 is in the filtering configuration, inner core inlet entrance 41 is configured to receive unfiltered water from connector body inlet 11 and inner core inlet exit 42 delivers water to filter 60 for filtering. In some embodiments, an inner core inlet sealing groove 44 is disposed about an inner core inlet entrance 41 on an outer surface of connector inner core 30. As may be viewed in FIGS. 2, 3A, and 3C, inner core inlet sealing ring 43 is at least partially disposed within inner core inlet sealing groove 44. Accordingly, the inner core inlet sealing ring 43 engages with connector inner core 30 and connector body 10 to form a seal. Such seal may advantageously prevent water from leaking into inner core inlet 31 during the bypass configuration and prevent undesirable leakage of water coming through inner core inlet 31 during the filtering configuration.

Inner core outlet 32 is preferably be L-shaped and includes inner core inlet filter tip receiving cavity 45 and inner core outlet exit 16. Filter tip receiving cavity 45 extends along the central axis of connector inner core 30 (as well as connector 1 and system 100). When system 100 is in the filtering configuration, filter tip receiving cavity 45 ise configured to receive filtered water from filter tip 92 of filter 60, which is disposed therein when filter 60 is mounted; and inner core outlet exit 26 delivers filtered water to connector body outlet 12. In some embodiments, an inner core outlet sealing groove 48 is disposed about inner core outlet exit 46 on an outer surface of connector inner core 30. As may be viewed in FIGS. 3A and 3C, inner core outlet sealing ring 47 is at least partially disposed within inner core outlet sealing groove 48. Accordingly, the inner core outlet sealing ring 47 engages with connector inner core 30 and connector body 10 to form a seal. Such seal may advantageously prevent water from leaking into or out of inner core outlet 32 during the bypass configuration and prevent undesirable leakage of water coming through inner core outlet 32 during the filtering configuration.

With reference to FIGS. 7A and 7C, connector inner core 30 includes a plurality of inner core rotation support protrusions 37. The plurality of inner core rotation support protrusions 37 are disposed at the top of connector inner core 30 and surround the central axis of connector inner core 30. The plurality of inner core rotation support protrusions 37 partially define a plurality of inner core rotation support gaps 38. The top portion of each of the plurality of inner core rotation support protrusions 37 is configured to be disposed within annular protrusion 16 of connector body 10. During the bypass configuration, water flows from connector body inlet 11 to connector body outlet 12 though, inter alia, inner core rotation support gaps 38.

With reference to FIG. 7B, connector inner core 30 defines a plurality of inner core engagement cavities 39. The plurality of inner core engagement cavities 39 are disposed at the bottom of connector inner core 30 and surround filter tip receiving cavity 45 of connector inner core 30. When filter 60 is partially or fully mounted within connector 1, the plurality of inner core engagement cavities 39 receive corresponding end cover engagement protrusions 74 of filter 60. In this manner, rotation of connector inner core 30 is effectuated by a rotation of filter 60. Inner core inlet exit 42 is disposed at a bottom of the connector between at least two of the plurality of engagement cavities 39. This may facilitate alignment of inner core inlet exit 42 with end cover inlet 71 of filter 60 when filter 60 is partially or fully mounted within connector 1.

In some embodiments, inner core baffle sealing groove 34 and inner core filter sealing groove 36 are disposed on an external cylindrical surface of connector inner core 30 below inner core inlet entrance 41 and inner core outlet exit 42. As may be viewed in FIGS. 2, 3A, and 3C, inner core baffle sealing ring 33 is at least partially disposed within inner core baffle sealing groove 34. Inner core baffle sealing ring 33 engages with connector inner core 30 and an internal surface of baffle 50 to form a seal. Such seal may advantageously prevent water from leaking between inner core inner core 30 and baffle 50.

Similarly, inner core filter sealing ring 35 is at least partially disposed within inner core filter sealing groove 36. Inner core filter sealing ring 35 engages with connector inner core 30 and an internal surface of annular platform 75 of filter end cover 70 to form a seal. Such seal may advantageously prevent water from leaking between connector inner core 30 and filter 60 outside of inner core inlet 31 and inner core outlet 32.

### Connector care baffle 50

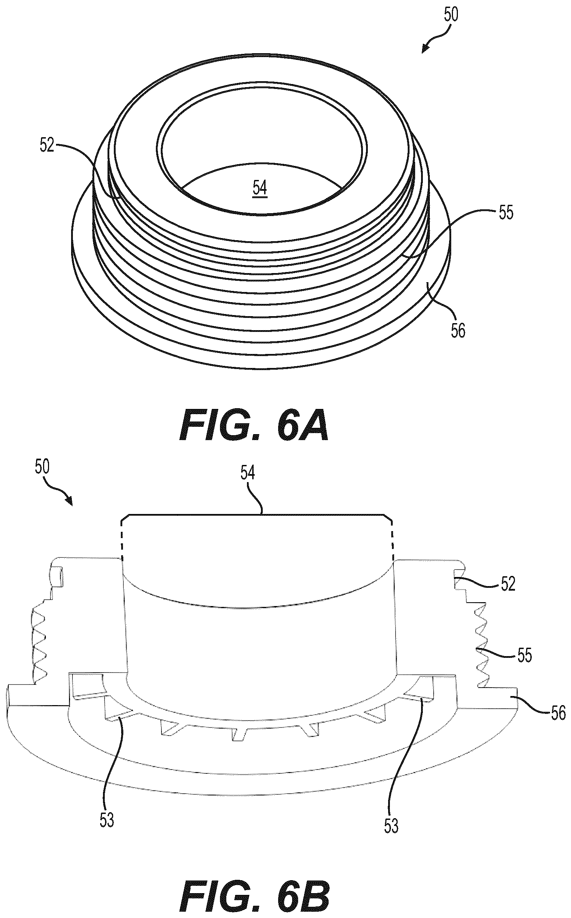

With reference to FIGS. 6A-6C, an embodiment of connector core baffle 50 is shown. Internal surfaces of connector core baffle 50 define baffle central hole 54, which is disposed along the central axis. As may be viewed in, for example, FIGS. 3A and 3C, a substantial portion of the lower cylindrical part of connector inner core 30 is disposed within baffle central hole 54. Connector core baffle 50 includes external threading 55, which is configured to engage with internal threading 17 of connector body 10. Engagement of threadings 55 and 17 locks connector inner core 30 and in its appropriate position within connector 1.

The bottom of connector core baffle 50 includes baffle annular lip 56, which abuts an internal annular underside surface of connector body 10 when connector core baffle 50 is fully screwed into connector body 10. This may be observed in in, for example, FIGS. 3A and 3C.

As may be best viewed in FIGS. 6B and 6C, connector core baffle 50 includes a plurality of baffle ribs 53 radially disposed on it underside. During assembly of connector 1, an installation tool engages with the plurality of baffle ribs 53; in this manner, connector core baffle 50 may be turned with sufficient force by an installation tool to securely engage threadings 55 and 17. Baffle ribs 53 additionally provide structural strength to baffle 50.

In some embodiments, external baffle sealing groove 52 is disposed on an external cylindrical surface of baffle 50 above external threading 55. As may be viewed in FIGS. 2, 3A, and 3C, external baffle sealing ring 51 is at least partially disposed within external baffle sealing groove 52. External baffle sealing ring 52 engages with baffle 50 and an internal surface of connector body 10. Such seal may advantageously prevent water from leaking between connector body 10 and baffle 50.

### Filter 60

With reference to FIG. 2, filter 60 includes filter end cover 70, filter cover body 80, and filter core 90. Filter 60 is not limited to the particular embodiments disclosed herein and may share many aspects and features with prior art water filters. However, as would be appreciated by a person of one in the art, filter 60 may include additional aspects and features that result in compatibility with connector 1 and serve to accomplish the purposes of embodiments disclosed herein. As may be viewed in FIG. 1B, filter end cover 70 is mounted upon filter cover body 80 to form a filter housing. Filter core 90 is held within this filter housing.

### Filter cover body 80

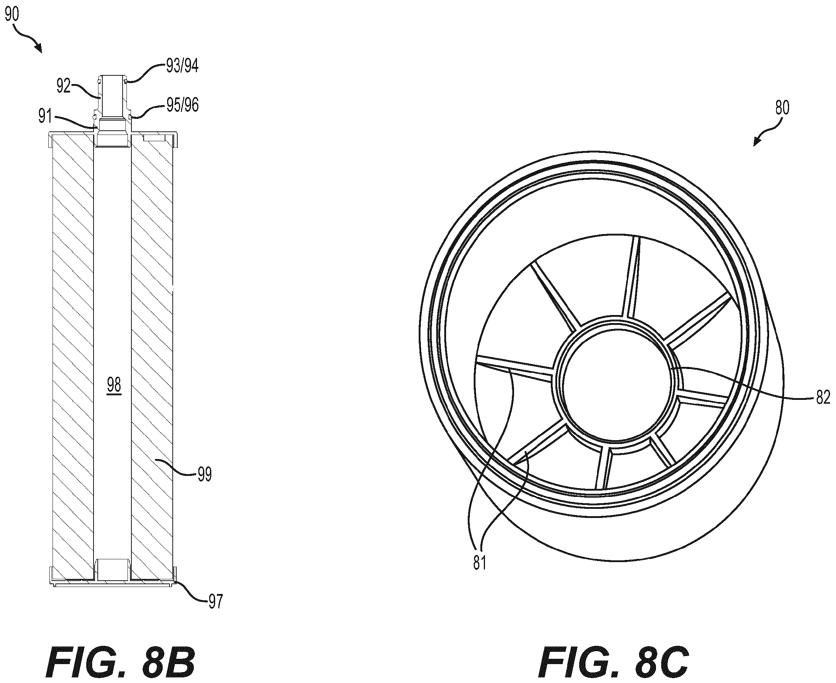

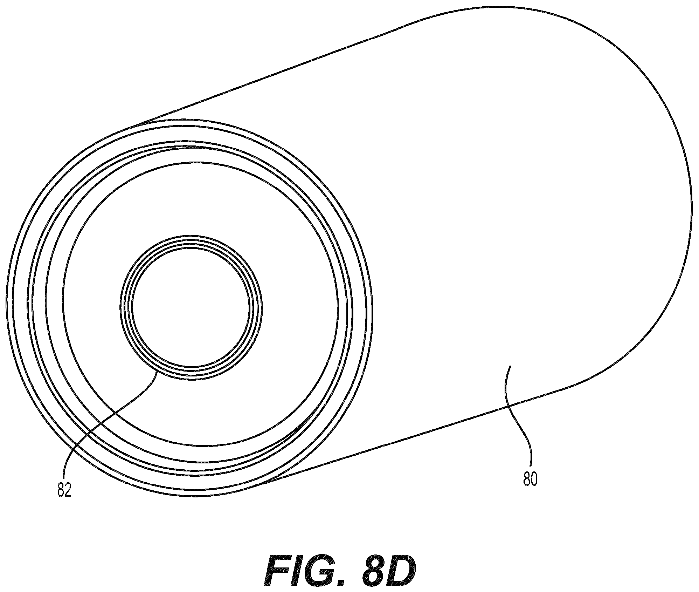

With reference to FIG. 8D, filter cover body 80, is a generally barrel-shaped structure that defines a filter cavity where filter core 90 is disposed. The filter cavity extends along the central axis. The bottom of filter cover body 80 includes various structures and features to improve strength. For example, as may be viewed in FIGS. 4 and 8C, a bottom surface of filter cover body 80 is generally curved. As may be best observed in FIGS. 8C and 8D, the bottom surface of filter cover body 80 includes support ring 82 around the central axis of filter cover body 80 (and filter 60 and system 100). As may be best observed in FIG. 8C, the bottom surface of filter cover body 80 further includes a plurality of reinforcement ribs 81 extending from support ring 82. In embodiments where filter cover body 80 has a generally curved bottom surface, the plurality of reinforcement ribs 81 and support ring 82 provide a substantially flat platform upon which filter core 90 is disposed.

### Filter end cover 70

With reference to FIG. 8A, filter end cover 70 defines end cover central opening 72 along the central axis of filter end cover 70 (and filter 60 and system 100). Filtered water exiting filter 60 passes through end cover central opening 72.

At the top of filter end cover 70, annular platform 75 surrounds end cover central opening 72. When filter 60 is fully mounted within connector 1, annular platform 75 abuts the plurality of baffle ribs 53 or, in alternative embodiments, another portion of baffle 50.

The plurality of end cover engagement protrusions 74 surround end cover central opening 72, are disposed internal to annular platform 75, and extend upward in a direction parallel to the central axis.

One or more end cover inlets 71 are disposed between annular platform 75 and end cover central opening 72. In some embodiments, for example as shown in FIG. 8A, end cover inlets 71 are also disposed between at least two end cover engagement protrusions 74. Water entering filter core 90 passes through at least one end cover inlet 71.

Filter end cover 70 also includes a plurality of outwardly extending flanges 73 that are configured to engage with inwardly extending flanges 14 of connector body 10. As shown, outwardly extending flanges 73 flanges are disposed on an outermost surface of filter end cover 70 and/or have a curved shape to promote secure engagement with inwardly extending flanges 14.

In some embodiments, as may be viewed in FIGS. 3C, 3D, and 4, the bottom rim of filter end cover 70 includes one or more protrusions and/or grooves configured to engage with one or more corresponding grooves and/or protrusions disposed on a top rim of filter cover body 80.

### Filter core 90

With reference to FIGS. 2 and 8B, filter core 90 includes a hollow cylindrical carbon rod 99, carbon rod cover 91, and carbon rod bottom 97. Carbon rod 99 defines filter core cavity 98 along the central axis of filter core 90 (and filter 60 and system 100). Filter core cavity 98 is sealed by carbon rod cover 91 at its top end and by carbon rod bottom 97 at its bottom end. In some embodiments, filter core 90 is sealed by welding.

Carbon rod cover 91 includes carbon rod cover tip 92, which extends along the central axis and form a conduit from filter core cavity 98.

In some embodiments, carbon rod cover tip 92 includes an upper tip sealing groove 94 and a lower tip sealing groove 96. As may be viewed in FIGS. 2, 3A, 3C, and 8B, upper tip sealing ring 93 is at least partially disposed within upper tip sealing groove 94. When filter 60 is fully mounted, upper tip sealing ring 93 engages with carbon rod cover tip 92 and an internal surface of connector inner core 30 along filter tip receiving cavity 45 to form a seal. Such seal may advantageously prevent undesirable leakage of water from or into filter tip receiving cavity 45 when system 100 is in use. This may, for example prevent mixing of filtered and unfiltered water. Similarly, lower tip sealing ring 95 is at least partially disposed within lower tip sealing groove 96. Lower tip sealing ring 95 engages with carbon rod cover tip 92 and an internal surface of filter end cover 70 along end cover central opening 72 to form a seal. Such seal may advantageously prevent undesirable leakage of water within filter 60 that could result in mixing of filtered and unfiltered water.

Carbon rod bottom 97 is generally disc shaped. Its lower surface includes protrusions to engage with gaps between and/or within the plurality of reinforcement ribs 81 and/or support ring 82 of filter cover body 90. Such engagement may further secure filter core 90 within filter 60.

It may be noted that in alternative embodiments, certain essential structures of the filtration system 100 may be reversed. For example, an alternative inner core inlet 31 has a structure substantially similar to inner core outlet 31 and, in the filtering configuration, it directs unfiltered water to filter 60 along the central axis; filtered water is expelled from filter 60 via a structure substantially similar to end cover inlet 71; and an alternative inner core outlet 32 has a structure substantially similar to inner core inlet 31.

### Filtration System 100 Operation

Filtration system 100 has a bypass configuration and a filtering configuration. It is configured to toggle between these two configurations based on the rotational position of connector inner core 30 within connector body 10. In turn, the rotational position of connector inner core 30 is determined by the status of filter 60 with respect to connector 1: When filter 60 is fully mounted within connector 1, connector inner core is in a rotational position that results the filtering configuration; and when filter 60 is not fully mounted within connector 1, connector inner core is in a rotational position that results in the bypass configuration.

During the filtering configuration, water enters filtration system 100 through an inlet pipe, for example from a water supply; is routed through filter 60, where it is filtered; and is directed to an outlet pipe such that the filtered water may be used.

During the bypass configuration, water enters filtration system 100 through the inlet pipe and is directed to the outlet pipe without filtering.

### Connector 1 assembly and installation

To assemble various embodiments of connector 1, some or all of the following steps may be taken.

Inner core inlet sealing ring 43, inner core outlet sealing ring 47, inner core baffle sealing ring 33, and/or inner core filter sealing ring 35 are inserted into the appropriate corresponding groves of connector inner core 30.

Connector inner core 30 is inserted into main connector body cavity 13 of connector body 10. During such insertion, the plurality of inner core rotation support protrusions 37 should be positioned at least partially within annular protrusion 16. Additionally, connector inner core 30 should be inserted such that stop element 18 does not prevent connector inner core 30 from being rotated such that connector body inlet 11 is aligned with inner core inlet 31 and connector body outlet 12 is aligned with inner core outlet 32. Connector inner core 30 is arranged such that its rotational position with respect to connector body 10 corresponds with the bypass configuration.

External baffle sealing ring 51 is inserted into external baffle sealing groove 52 of baffle 50.

Baffle 50 is inserted into main connector body cavity 13 of connector body 10 such that the lower cylindrical portion of connector inner core 30 is disposed within baffle central hole 54. Baffle 50 is screwed into connector body 10 such that its external threading 55 fully engages with internal threading 17 of connector body 10. An installation tool that engages with the plurality of baffle ribs 53 may be used to ensure a tight and secure, installation of baffle 50.

O-rings 26 of quick insertion assemblies 21 and 22 are inserted into connector body inlet 11 and connector body outlet 12, respectively. Insertion baffles 27 and quick-connection claws 28 of quick insertion assemblies 21 and 22, respectively, are engaged and inserted into connector body inlet 11 and connector body outlet 12, respectively. Optionally, threaded barbs 25 of quick insertion assemblies 21 and 22 are inserted to engage with their corresponding quick-connection claws 28.

### The assembly of connector 1 is completed.

To install various embodiments of connector 1, some or all of the following steps may be taken. The water supply should be off during initial installation of connector 1.

Connector 10 is mounted or otherwise secured in a desired location. A user inserts screws, bolts, nails, or the like through one or more holes of hanging element 15 to secure connector 1 to a desired surface or object.

A user connects the inlet pipe to filtration system 100 by screwing threaded barb 25 of inlet quick insertion assembly 21 into the inlet pipe or connector thereof. A user connects the outlet pipe to filtration system 100 by screwing threaded barb 25 of outlet quick insertion assembly 22 into the outlet pipe or connector thereof.

In some embodiments, each threaded barb 25 is removed from its corresponding quick insertion assembly 21/22 prior to its connection to the inlet/outlet pipe. Each threaded barb 25 is screwed into the appropriate pipe and then inserted into the appropriate quick-connection claw 28 to quickly and easily effectuate installation.

In other embodiments, each threaded barb 25 is screwed into its corresponding inlet/outlet pipe without disconnecting it from its corresponding quick-connection claw 28.

### The installation of connector 1 is completed.

### Water Bypass Flow 101

When connector 1 is initially installed without mounting of filter 60, filtration system 100 should be in bypass configuration. Filtration system 100 should also be in the bypass configuration whenever filter 60 is not fully mounted within connector 1.

FIGS. 3C - 3E illustrate an embodiment of filtration system 100, or portions thereof, in the bypass configuration. With reference to FIGS. 3D and 3E, water bypass flow 101 illustrates the flow of water through filtration system 100 should be in the bypass configuration.

With reference to FIG. 3C, water enters connector 1 from the water supply inlet pipe via connector body inlet 11, in which inlet quick insertion 21 assembly is installed. Connector inner core's 30 rotational position may be such that inner core inlet entrance 41 of connector inner core 30 is not aligned with connector body inlet 11. In certain embodiments, for example as in FIG. 3C, inner core inlet entrance 41 may be substantially perpendicular to connector body inlet 11. Accordingly, water flows from connector body inlet 11 into the inlet side of bypass void 49. Bypass void 49 is a portion of the upper part of the connector body main cavity 13 that remains unoccupied notwithstanding the presence of connector inner core 30 elements in the upper part of the connector body main cavity 13. Accordingly, bypass void 49 rotates within connector body 10 about the central axis in concert with connector inner core 30.

Because the water cannot flow through connector inner core 30 to connector body water outlet 12, water bypass flow 101 is forced above the central portion of connector inner core 30 and into the outlet side of bypass void 49. In preferred embodiments, pass flow 101 passes through inner core rotation support gaps 38. From the outlet side of bypass void 49, bypass flow 101 proceeds through connector body water outlet 12, in which outlet quick insertion assembly 22 is installed, and into the outlet pipe.

### Filter 60 mounting

To mount filter 60 in connector 1, the top portion of filter 60 is inserted into connector 1 along the central axis. As may be visualized with reference to FIGS. 5B and 8A, to accomplish such insertion, outwardly extending flanges 73 of filter 60 should be positioned to enter connector main body cavity 13 by avoiding inwardly extended flanges 14 of connector body 10. During insertion, the plurality of end cover engagement protrusions 74 of filter 60 mate, at least partially, with the plurality of inner core engagement cavities 39 of connector inner core 30.

Then, the user firmly turns filter 60 until it is secure. In preferred embodiments, filtration system 100 is configured for filter 60 to be mounted via a standard clockwise rotation, but this disclosure is not so limited. In alternative embodiments, a counter-clockwise mounting is contemplated.

The rotation of filter 60 causes lower surfaces of outwardly extending flanges 73 of filter 60 to engage with upper surfaces inwardly extended flanges 14 of connector body 10. The engagement of flanges 73 and 14 utilizes the rotation of the filter 60 to drive filter 60 deeper into connector 1 until it is fully mounted. Such full mounting ensures effectiveness of various seals. In certain embodiments, the flanges 73 and 14 effectively lock filter 60 to connector 1 when filter 60 is fully mounted.

Additionally, the rotation of filter 60 causes connector inner core 30 to rotate via the mating of the plurality of end cover engagement protrusions 74 with the plurality of inner core engagement cavities 39. This rotational movement of connector inner core 30 within connector body 10 toggles filtration system 100 from the bypass configuration to the filtering configuration. In preferred embodiments, the rotational movement to achieve this toggling may be approximately 90 degrees. However, rotational movements of the connector inner core 30 within connector body 10 of between 60 and 120 degrees may be necessary in other embodiments. The rotational movement of connector inner core 30 is halted when connector inner core 30 physically contacts stop element 18 of connector body 10. In preferred embodiments, this coincides with an effective locking filter 60 to connector 1.

Once filter 60 is fully mounted, filtration system 100 is in the filtering configuration. A user need not disconnect the water supply to mount filter 60.

### Filtration Flow 102

FIGS. 3A, 3B, 4, and 8E illustrate an embodiment of filtration system 100, or portions thereof, in the filtering configuration. With reference to FIGS. 3B, 4, and 8E, filtration flow 102 illustrates the flow of water through filtration system 100 in the filtration configuration.

With reference to FIG. 3A, water enters connector 1 from the water supply inlet pipe via connector body inlet 11, in which inlet quick insertion 21 assembly is installed (not shown in FIGS. 3A and 3B). Connector inner core's 30 rotational position is such that inner core inlet entrance 41 of connector inner core 30 is aligned with connector body inlet 11. Accordingly, water flows through inner core inlet 31 and exit connector inner core 30 at inner core inlet exit 42 and enter filter end cover inlet 71. With reference to FIG. 8E, filter inlet flow 61 through end cover inlet 71 is illustrated.

The unfiltered water then proceeds along the side of filter end cover 70 and be forced through the sides of carbon rod 99, whereby the water is filtered. The filtered water is received in filter core cavity 98 and expelled from filter core 90 through carbon rod cover tip 92. With reference to FIG. 8E, filter outlet flow 62 through carbon rod cover tip 92 is illustrated.

Carbon rod cover tip 92 is disposed within filter tip receiving cavity 45, which forms part of inner core outlet 32. Accordingly, the filtered water is received by inner core outlet 32, which routes the filtered water through inner core outlet exit 46; into connector body water outlet 12, in which outlet quick insertion assembly 22 is installed (not shown in FIGS. 3A and 3B); and into the outlet pipe.

### Filter 60 removal

To remove filter 60 from connector 1, the user firmly rotates filter 60 until flanges 73 and 14 are no longer engaged. Then, the user pulls filter 60 down to remove it. In preferred embodiments, filtration system 100 is configured for filter 60 to be dismounted via a standard counter-clockwise rotation, but this disclosure is not so limited. In alternative embodiments, a clockwise dismounting is contemplated.

The rotation of filter 60 ultimately releases the engagement of lower surfaces of outwardly extending flanges 73 of filter 60 and upper upper surfaces of inwardly extended flanges 14 of connector body 10. This permits filter 60 to be released from connector 1.

Additionally, the rotation of filter 60 causes connector inner core 30 to turn via the mating of the plurality of end cover engagement protrusions 74 with the plurality of inner core engagement cavities 39. This rotational movement of connector inner core 30 within connector body 10 toggles filtration system 100 from the filtering configuration to the bypass configuration. In preferred embodiments, filtration system 100 is converted to the bypass configuration after only a small rotational movement of the connector inner core 30, wherein the filter remains partially mounted. In some embodiments, the plurality of end cover engagement protrusions 74 and the plurality of inner core engagement cavities 39 are not unmated until the rotational movement of connector inner core 30 in the un-mounting direction is approximately 90 degrees. At that point, outwardly extending flanges 73 of filter 60 and inwardly extended flanges 14 of connector body 10 clear each other, permitting filter 60 to be fully removed by downward force.

Once filter 60 is at least partially dismounted, filtration system 100 is in the bypass configuration. A user need not disconnect the water supply to disconnect filter 60.

In the present disclosure, the terms "first," "second," and the like are used for descriptive purposes only, and are not to be construed as indicating or implying a relative importance or a set number of technical features. Thus, features defining "first," "second," etc. may include one or more of the features, either explicitly or implicitly. In the description, unless otherwise stated, "a plurality of" means two or more. It should also be noted that terms "installation," "connected with each other," "connected," and the like are to be understood broadly, and may describe, for example, a fixed connection, a disassembled connection, an integral connection, a mechanical connection, an electrical connection, a direct connection, an indirect connection through an intermediate medium, and/or an internal connection between the inner portions of two elements. The specific meanings of the above and similar terms in the context of the present disclosure may be readily understood by a person of ordinary skill in the art.

Furthermore, all examples and conditional language recited herein are principally intended to aid the reader in understanding the principles of the invention and the concepts contributed by the inventors to furthering the art, and are to be construed without limitation to such specifically recited examples and conditions. Moreover, all statements herein reciting principles and aspects of the invention, as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. The scope of the present invention, therefore, is not intended to be limited to the exemplary configurations shown and described herein.

In this specification, various preferred embodiments have been described with reference to the accompanying drawings. It will be apparent, however, that various other modifications and changes may be made thereto and additional embodiments may be implemented without departing from the broader scope of any claims that follow. The specification and drawings are accordingly to be regarded in an illustrative rather than restrictive sense.

## Claims

1. A water filtration system (100), comprising:
a connector (1), the connector including a connector body (10), a connector inner core (30), a connector core baffle (50), a connector body water inlet (11) of the connector body, and a connector body water outlet (12) of the connector body; and
a filter (60) configured to be mounted in the connector (1),
wherein:
the water filtration system (100) has a filtering configuration and a bypass configuration;
in the filtering configuration, the water filtration system (100) is configured to direct water received via the connector body water inlet (11) through the filter (60) and out the connector body water outlet (12);
in the bypass configuration, the water filtration system (100) is configured to direct water received via the connector body water inlet (11) out the connector body water outlet (12) without passage through the filter (60);
the water filtration system (100) is in the filtering configuration when the filter (60) is fully mounted in the connector (1);
the water filtration system (100) is in the bypass configuration when the filter (60) is partially mounted in the connector (1) and when the filter (60) is not mounted in the connector (1);
the water filtration system (100) is configured to switch between the filtering configuration and the bypass configuration by a rotation of the connector inner core (30) about a central axis within the core body (10);
the connector inner core (30) includes an inner core inlet (31) and an inner core outlet (32);
further comprising an inner core inlet sealing ring (43) and an inner core outlet sealing ring (47) wherein
the connector inner core (30) includes an inner core inlet sealing groove (44) disposed about an entrance (41) to the inner core inlet (31);
the connector inner core (30) includes an inner core outlet sealing groove (48) disposed about an exit (46) of the inner core outlet (32);
the inner core inlet sealing ring (43) is at least partially disposed within the inner core inlet sealing groove (44);
the inner core outlet sealing ring (47) is at least partially disposed within the inner core outlet sealing groove (48);
the inner core inlet sealing ring (43) engages with the connector inner core (30) and the connector body (10) to form a first seal;
the inner core outlet sealing ring (47) engages with the connector inner core (30) and the connector body (10) to form a second seal;
the inner core inlet (31) forms an L along its length; and the inner core outlet (32) forms an L along its length;
the inner core inlet (31) is configured to direct water from the connector body water inlet (11) into the filter (60) when the water filtration system (100) is in the filtering configuration; and
the inner core outlet (32) is configured to direct water from the filter (60) to the connector body water outlet (12) when the water filtration system is in the filtering configuration;
the connector core baffle (50) has a baffle central hole (54) in which a portion of the connector inner core (30) is disposed, wherein said connector core baffle has an external threading (55) which is engaged with an internal threading (17) of the connector body (10);
**characterized in that**
when the entrance (41) to the inner core inlet (31) is aligned with the connector body inlet (11) and the exit (46) of inner core outlet (32) is aligned with the connector body water outlet (12), then the connector inner core (30), the connector body water inlet (11) and the connector body water outlet (12), and the inner core inlet sealing ring (43) and inner core outlet sealing ring (47) form a sealed structure so that water enters the inner core inlet (31) via the inner core inlet entrance (41) from the connector body water inlet (11), enters the connector inner core (30), then passes through the filter (60) and flows out of the connector body through the connector body water outlet (12) via the inner core outlet (32) and the exit (46), thereby opening the water path of the water filtration system (100) to form a filtering configuration; and
when the connector inner core (30) is rotated such that entrance (41) to the inner core inlet (31) is no more aligned with the connector body inlet (11) and the exit (46) of the inner core outlet (32) is no more aligned with the connector body water outlet (12), then the connector inner core (30), the inner core inlet sealing ring (43) and the inner core outlet sealing ring (47), and the connector body (10) form a sealed structure to prevent water from entering the water path in the connector inner core (30), and the water filtration system (100) switches to the bypass configuration to allow the water to enter a bypass void (49) from the connector body water inlet (11), to pass above a central portion of the connector inner core (30) and to exit through the connector body water outlet (12), wherein the bypass void (49) is formed through the center of the connector body (10) and is defined by the connector body (10), the connector inner core (30) and the connector core baffle (50).

2. The water filtration system of claim 1, wherein:
the connector body (10) defines a main connector body cavity (13);
the connector body (10) includes an annular protrusion disposed at the top of the main connector body cavity (13) and around the central axis;
the connector inner core (30) includes a plurality of inner core rotation support protrusions (37) disposed at the top of the inner core around the central axis; and
the plurality of inner core rotation support protrusions (37) are at least partially disposed within the annular protrusion (16).

3. The water filtration system of claim 2, wherein further:
the plurality of inner core rotation support protrusions (37) define a plurality of inner core rotation support gaps (38); and
the connector (1) is configured to direct water through the plurality of inner core rotation support gaps (38) when the water filtration system (100) is in the bypass configuration.

4. The water filtration system of claim 1, wherein further:
the connector body (10) defines a main connector body cavity (13);
the connector body (10) includes a plurality of inwardly extending flanges (14) disposed near the bottom of the connector body (10);
the filter (60) includes a plurality of outwardly extending flanges (73) disposed near the top of the filter (60);
the inwardly extending flanges (14) are configured to engage with the outwardly extending flanges (73) of the filter (60) when the filter (60) is fully mounted in the connector (1).

5. The water filtration system of claim 1, wherein:
the connector body (10) defines a main connector body cavity (13);
the connector body (10) includes a stop element (18) disposed at the top of the main connector body cavity (13); and
the stop element (18) is configured to limit the rotation of the connector inner core (30) within the connector body (10) to between 60 and 120 degrees.

6. The water filtration system of claim 2, wherein:
the inner core outlet (32) includes a filter tip receiving cavity (45) disposed at a bottom of the connector inner core (30) along the central axis;
the bottom of the connector inner core (30) defines a plurality of engagement cavities (39) surrounding the filter tip receiving cavity (45); and
the inner core inlet (31) includes an inner core inlet exit (42) disposed at a bottom of the connector inner core (30) between at least two of the plurality of engagement cavities (39).

7. The water filtration system of claim 6, wherein:
the filter (60) includes an end cover (70) and a filter tip (92); and
the end cover (70) includes an end cover central opening (72) along the central axis, a plurality of end cover engagement protrusions (74) surrounding the end cover central opening (72), and an end cover inlet (71) disposed between at least two of the end cover protrusions (74); and
the filter tip (92) is at least partially disposed within the end cover central opening (72).

8. The water filtration system of claim 7, wherein
the filter tip receiving cavity (45) is configured to receive the filter tip (92);
the plurality of end cover engagement protrusions (74) are configured to engage with the plurality of engagement cavities (39); and
the end cover inlet (71) is configured to align with the inner core inlet exit (42) when the filter (60) is partially or fully mounted in the connector (1),
an engagement between the plurality of end cover engagement protrusions (74) and the plurality of engagement cavities (39), respectively, being configured to enable the rotation of the connector inner core (30) by a rotation of the filter (60).

9. The water filtration system of claim 1, further comprising an inner core baffle sealing ring (33) and an inner core filter sealing ring (35), wherein:
the connector inner core (30) includes an inner core baffle sealing groove (34) and an inner core filter sealing groove (36);
the inner core baffle sealing ring (33) is at least partially disposed within the inner core baffle sealing groove (34);
the inner core baffle sealing ring (33) engages with the connector inner core (30) and the connector core baffle (50) to form a first seal;
the inner core filter sealing ring (35) is at least partially disposed within the inner core filter sealing groove (36); and
when the filter (60) is fully mounted in the connector (1), the inner core filter sealing ring (35) engages with the connector inner core (30) and the filter (60) to form a second seal.

10. The water filtration system of claim 1, wherein:
the inner core outlet (32) includes a filter tip (92) receiving cavity around the central axis;
the filter (60) includes a filter tip (92);
the filter tip (92) is disposed within the filter tip receiving cavity (45) when the filter (60) is fully mounted in the connector (1), and further comprising a filter tip outlet upper sealing ring, wherein:
the filter tip (92) includes a filter tip outlet upper sealing groove;
the filter tip outlet upper sealing ring is at least partially disposed within the filter tip outlet upper sealing groove; and
the filter tip outlet upper sealing ring engages with an interior surface of the connector inner core (30) and the filter tip (92) to form a seal when the filter (60) is mounted in the connector (1).

11. The water filtration system of claim 1, further comprising an inlet quick insertion assembly (21) and an outlet quick insertion assembly (22), wherein further:
the inlet quick insertion assembly (21) is configured to be installed within the connector body water inlet (11);
the outlet quick insertion assembly (22) is configured to be installed within the connector body water outlet (12);
the inlet quick insertion assembly (21) includes a first threaded barb, a first O-ring, a first baffle, and a first quick-connection claw; and
the outlet quick insertion assembly (22) includes a second threaded barb, a second O-ring, a second baffle, and a second quick-connection claw.

## Patentansprüche

1. Ein Filtrationssystem (100), umfassend:
einen Anschluss (1), wobei der Anschluss ein Anschlussgehäuse (10), einen inneren Anschlusskern (30), eine Anschlusskernblende (50), einen Wassereinlass (11) des Anschlussgehäuses und einen Wasserauslass (12) des Anschlussgehäuses umfasst; und
einen Filter (60), der so ausgestaltet ist, dass er in dem Anschluss (1) montierbar ist, wobei:
das Filtrationssystem (100) eine Filterkonfiguration und eine Bypass-Konfiguration aufweist;
in der Filterkonfiguration ist das Filtrationssystem (100) so ausgestaltet, dass Wasser, das über den Wassereinlass (11) des Anschlussgehäuses aufgenommen wird, durch den Filter (60) hindurch und zum Wasserauslass (12) des Anschlussgehäuses geleitet wird;
in der Bypass-Konfiguration ist das Filtrationssystem (100) so ausgestaltet, dass Wasser, das über den Wassereinlass (11) des Anschlussgehäuses aufgenommen wird, ohne Durchtritt durch den Filter (60) direkt zum Wasserauslass (12) des Anschlussgehäuses geleitet wird;
das Filtrationssystem (100) befindet sich in der Filterkonfiguration, wenn der Filter (60) vollständig in dem Anschluss (1) montiert ist;
das Filtrationssystem (100) befindet sich in der Bypass-Konfiguration, wenn der Filter (60) teilweise in dem Anschluss (1) montiert ist und wenn der Filter (60) nicht in dem Anschluss (1) montiert ist;
das Filtrationssystem (100) ist so ausgestaltet, dass zwischen der Filterkonfiguration und der Bypass-Konfiguration durch eine Drehung des inneren Anschlusskerns (30) um eine Mittelachse innerhalb des Anschlussgehäuses (10) umgeschaltet wird;
der innere Anschlusskern (30) umfasst einen Einlass (31) des Anschlusskerns und einen Auslass (32) des Anschlusskerns;
weiterhin umfassend einen Dichtungso-Ring (43) für den Einlass des Anschlusskerns und einen Dichtungso-Ring (47) für den Auslass des Anschlusskerns, wobei:
der innere Anschlusskern (30) eine Dichtungsnut (44) für den Einlass aufweist, die um einen Eingang (41) des Einlasses (31) des Anschlusskerns angeordnet ist;
der innere Anschlusskern (30) eine Dichtungsnut (48) für den Auslass aufweist, die um einen Ausgang (46) des Auslasses (32) des Anschlusskerns angeordnet ist;
der Dichtungso-Ring (43) ist mindestens teilweise in der Dichtungsnut (44) des Einlasses aufgenommen;
der Dichtungso-Ring (47) ist mindestens teilweise in der Dichtungsnut (48) des Auslasses aufgenommen;
der Dichtungso-Ring (43) liegt zwischen dem inneren Anschlusskern (30) und dem Anschlussgehäuse (10) an und bildet eine erste Dichtung;
der Dichtungso-Ring (47) liegt zwischen dem inneren Anschlusskern (30) und dem Anschlussgehäuse (10) an und bildet eine zweite Dichtung;
der Einlass (31) des Anschlusskerns verläuft in L-Form, und der Auslass (32) des Anschlusskerns verläuft ebenfalls in L-Form;
der Einlass (31) ist so ausgestaltet, dass er Wasser vom Wassereinlass (11) des Anschlussgehäuses in den Filter (60) leitet, wenn sich das Filtrationssystem (100) in der Filterkonfiguration befindet; und
der Auslass (32) ist so ausgestaltet, dass er Wasser aus dem Filter (60) zum Wasserauslass (12) des Anschlussgehäuses leitet, wenn sich das Filtrationssystem in der Filterkonfiguration befindet;
die Anschlusskernblende (50) weist eine zentrale Blendenöffnung (54) auf, in welcher ein Abschnitt des inneren Anschlusskerns (30) aufgenommen ist, wobei die Anschlusskernblende ein Außengewinde (55) aufweist, das mit einem Innengewinde (17) des Anschlussgehäuses (10) im Eingriff ist;
**dadurch gekennzeichnet, dass**:
wenn der Eingang (41) des Einlasses (31) mit dem Wassereinlass (11) des Anschlussgehäuses und der Ausgang (46) des Auslasses (32) mit dem Wasserauslass (12) des Anschlussgehäuses fluchtet, dann bilden der innere Anschlusskern (30), der Wassereinlass (11) und der Wasserauslass (12) des Anschlussgehäuses sowie der Dichtungso-Ring (43) und der Dichtungso-Ring (47) eine abgedichtete Struktur, so dass Wasser über den Eingang (41) des Einlasses (31) vom Wassereinlass (11) in den inneren Anschlusskern (30) eintritt,
durch den Filter (60) hindurchtritt und über den Auslass (32) und den Ausgang (46) durch den Wasserauslass (12) aus dem Anschlussgehäuse austritt, wodurch der Wasserpfad des Filtrationssystems (100) geöffnet wird, um die Filterkonfiguration zu bilden; und
wenn der innere Anschlusskern (30) so verdreht wird, dass der Eingang (41) des Einlasses (31) nicht mehr mit dem Wassereinlass (11) des Anschlussgehäuses und der Ausgang (46) des Auslasses (32) nicht mehr mit dem Wasserauslass (12) des Anschlussgehäuses fluchtet, dann bilden der innere Anschlusskern (30), der Dichtungso-Ring (43), der Dichtungso-Ring (47) und das Anschlussgehäuse (10) eine abgedichtete Struktur, um zu verhindern, dass Wasser in den Wasserpfad im inneren Anschlusskern (30) eintritt, und das Filtrationssystem (100) schaltet in die Bypass-Konfiguration um, wobei das Wasser durch einen Bypass-Hohlraum (49) vom Wassereinlass (11) in das System eintritt, über einen zentralen Bereich des inneren Anschlusskerns (30) geführt wird und durch den Wasserauslass (12) des Anschlussgehäuses austritt, wobei der Bypass-Hohlraum (49) durch das Zentrum des Anschlussgehäuses (10) verläuft und durch das Anschlussgehäuse (10), den inneren Anschlusskern (30) und die Anschlusskernblende (50) begrenzt ist.

2. Das Filtrationssystem nach Anspruch 1, wobei:
der Anschlusskörper (10) eine Hauptanschlusskörperhöhle (13) definiert;
der Anschlusskörper (10) einen ringförmigen Vorsprung umfasst, der am oberen Ende der Hauptanschlusskörperhöhle (13) und um die Mittelachse herum angeordnet ist;
der innere Anschlusskern (30) eine Mehrzahl von drehbaren Stützvorsprüngen (37) am oberen Ende des Anschlusskerns um die Mittelachse herum aufweist; und
die Mehrzahl der drehbaren Stützvorsprünge (37) zumindest teilweise innerhalb des ringförmigen Vorsprungs (16) angeordnet ist.

3. Das Filtrationssystem nach Anspruch 2, wobei ferner:
die Mehrzahl der drehbaren Stützvorsprünge (37) eine Mehrzahl von Stützlücken (38) bildet; und
der Anschluss (1) so ausgestaltet ist, dass Wasser durch die Mehrzahl der Stützlücken (38) geleitet wird, wenn sich das Filtrationssystem (100) in der Bypass-Konfiguration befindet.

4. Das Filtrationssystem nach Anspruch 1, wobei ferner:
der Anschlusskörper (10) eine Hauptanschlusskörperhöhle (13) definiert;
der Anschlusskörper (10) eine Mehrzahl von nach innen gerichteten Flanschen (14) aufweist, die nahe dem unteren Ende des Anschlusskörpers (10) angeordnet sind;
der Filter (60) eine Mehrzahl von nach außen gerichteten Flanschen (73) aufweist, die nahe dem oberen Ende des Filters (60) angeordnet sind; und
die nach innen gerichteten Flansche (14) so ausgestaltet sind, dass sie sich mit den nach außen gerichteten Flanschen (73) des Filters (60) verbinden, wenn der Filter (60) vollständig in dem Anschluss (1) montiert ist.

5. Das Filtrationssystem nach Anspruch 1, wobei:
der Anschlusskörper (10) eine Hauptanschlusskörperhöhle (13) definiert;
der Anschlusskörper (10) ein Anschlagelement (18) umfasst, das am oberen Ende der Hauptanschlusskörperhöhle (13) angeordnet ist; und
das Anschlagelement (18) so ausgestaltet ist, dass es die Drehung des inneren Anschlusskerns (30) innerhalb des Anschlusskörpers (10) auf einen Bereich zwischen 60 und 120 Grad begrenzt.

6. Das Filtrationssystem nach Anspruch 2, wobei:
der Auslass (32) des inneren Anschlusskerns eine Aufnahmehöhlung (45) für eine Filterspitze umfasst, die am unteren Ende des inneren Anschlusskerns (30) entlang der Mittelachse angeordnet ist;
das untere Ende des inneren Anschlusskerns (30) eine Mehrzahl von Eingriffsvertiefungen (39) definiert, welche die Aufnahmehöhlung (45) für die Filterspitze umgeben; und
der Einlass (31) des inneren Anschlusskerns eine Austrittsöffnung (42) umfasst, die am unteren Ende des inneren Anschlusskerns (30) zwischen mindestens zwei der Eingriffsvertiefungen (39) angeordnet ist.

7. Das Filtrationssystem nach Anspruch 6, wobei:
der Filter (60) einen Enddeckel (70) und eine Filterspitze (92) umfasst;
der Enddeckel (70) eine zentrale Öffnung (72) entlang der Mittelachse, eine Mehrzahl von Eingriffsvorsprüngen (74), die die zentrale Öffnung (72) umgeben, sowie einen Einlass (71) umfasst, der zwischen mindestens zwei der Eingriffsvorsprünge (74) angeordnet ist; und
die Filterspitze (92) zumindest teilweise innerhalb der zentralen Öffnung (72) des Enddeckels angeordnet ist.

8. Das Filtrationssystem nach Anspruch 7, wobei:
die Aufnahmehöhlung (45) so ausgestaltet ist, dass sie die Filterspitze (92) aufnimmt;
die Mehrzahl der Eingriffsvorsprünge (74) des Enddeckels so ausgestaltet ist, dass sie mit der Mehrzahl der Eingriffsvertiefungen (39) in Eingriff stehen; und
der Einlass (71) des Enddeckels so ausgestaltet ist, dass er mit der Austrittsöffnung (42) des Einlasses des inneren Anschlusskerns fluchtet, wenn der Filter (60) teilweise oder vollständig in dem Anschluss (1) montiert ist,
ein Eingriff zwischen der Mehrzahl der Eingriffsvorsprünge (74) und der Mehrzahl der Eingriffsvertiefungen (39) so ausgestaltet ist, dass er eine Drehung des inneren Anschlusskerns (30) durch eine Drehung des Filters (60) ermöglicht.

9. Das Filtrationssystem nach Anspruch 1, ferner umfassend einen Dichtungsring (33) für die Anschlusskernblende und einen Dichtungsring (35) für den Filter, wobei:
der innere Anschlusskern (30) eine Dichtnut (34) für die Anschlusskernblende und eine Dichtnut (36) für den Filter aufweist;
der Dichtungsring (33) für die Anschlusskernblende ist zumindest teilweise in der Dichtnut (34) aufgenommen;
der Dichtungsring (33) liegt zwischen dem inneren Anschlusskern (30) und der Anschlusskernblende (50) an, um eine erste Dichtung zu bilden;
der Dichtungsring (35) für den Filter ist zumindest teilweise in der Dichtnut (36) aufgenommen; und
wenn der Filter (60) vollständig in dem Anschluss (1) montiert ist, liegt der Dichtungsring (35) zwischen dem inneren Anschlusskern (30) und dem Filter (60) an, um eine zweite Dichtung zu bilden.

10. Das Filtrationssystem nach Anspruch 1, wobei:
der Auslass (32) des inneren Anschlusskerns eine Aufnahmehöhlung für eine Filterspitze (92) um die Mittelachse herum umfasst;
der Filter (60) eine Filterspitze (92) umfasst;
die Filterspitze (92) ist innerhalb der Aufnahmehöhlung (45) angeordnet, wenn der Filter (60) vollständig in dem Anschluss (1) montiert ist,
und ferner ein oberer Dichtungsring für den Auslass der Filterspitze vorgesehen ist, wobei:
die Filterspitze (92) eine obere Dichtnut für den Auslass umfasst;
der obere Dichtungsring für den Auslass der Filterspitze ist zumindest teilweise in dieser Dichtnut aufgenommen; und
der obere Dichtungsring liegt an einer Innenfläche des inneren Anschlusskerns (30) und an der Filterspitze (92) an, um eine Dichtung zu bilden, wenn der Filter (60) in dem Anschluss (1) montiert ist.

11. Das Filtrationssystem nach Anspruch 1, ferner umfassend eine Schnellanschlusseinheit für den Einlass (21) und eine Schnellanschlusseinheit für den Auslass (22), wobei ferner:
die Schnellanschlusseinheit für den Einlass (21) dafür vorgesehen ist, im Wassereinlass (11) des Anschlusskörpers installiert zu werden;
die Schnellanschlusseinheit für den Auslass (22) dafür vorgesehen ist, im Wasserauslass (12) des Anschlusskörpers installiert zu werden;
die Schnellanschlusseinheit für den Einlass (21) umfasst einen ersten Gewindestutzen, einen ersten O-Ring, eine erste Blende und eine erste Schnellverbindungsklaue; und
die Schnellanschlusseinheit für den Auslass (22) umfasst einen zweiten Gewindestutzen, einen zweiten O-Ring, eine zweite Blende und eine zweite Schnellverbindungsklaue.

## Revendications

1. Un système de filtration d'eau (100), comprenant:
un connecteur (1), le connecteur comprenant un corps de connecteur (10), un noyau interne de connecteur (30), une chicane centrale de connecteur (50), une entrée d'eau (11) du corps de connecteur, et une sortie d'eau (12) du corps de connecteur; et
un filtre (60) conçu pour être monté dans le connecteur (1),
dans lequel:
le système de filtration d'eau (100) présente une configuration de filtrage et une configuration de dérivation;
dans la configuration de filtrage, le système de filtration d'eau (100) est conçu pour diriger l'eau reçue via l'entrée d'eau (11) du corps de connecteur à travers le filtre (60) et vers la sortie d'eau (12) du corps de connecteur;
dans la configuration de dérivation, le système de filtration d'eau (100) est conçu pour diriger l'eau reçue via l'entrée d'eau (11) du corps de connecteur vers la sortie d'eau (12) du corps de connecteur sans passer par le filtre (60);
le système de filtration d'eau (100) est en configuration de filtrage lorsque le filtre (60) est entièrement monté dans le connecteur (1);
le système de filtration d'eau (100) est en configuration de dérivation lorsque le filtre (60) est partiellement monté dans le connecteur (1) et lorsque le filtre (60) n'est pas monté dans le connecteur (1);
le système de filtration d'eau (100) est conçu pour commuter entre la configuration de filtrage et la configuration de dérivation par rotation du noyau interne de connecteur (30) autour d'un axe central à l'intérieur du corps principal (10);
le noyau interne de connecteur (30) comprend une entrée interne (31) et une sortie interne (32);
le système comprend en outre un joint d'étanchéité d'entrée interne (43) et un joint d'étanchéité de sortie interne (47), dans lequel :
le noyau interne de connecteur (30) comprend une gorge d'étanchéité d'entrée (44) disposée autour d'une ouverture (41) de l'entrée interne (31);
le noyau interne de connecteur (30) comprend une gorge d'étanchéité de sortie (48) disposée autour d'une sortie (46) de la sortie interne (32);
le joint d'étanchéité d'entrée interne (43) est au moins partiellement logé dans la gorge d'étanchéité d'entrée (44);
le joint d'étanchéité de sortie interne (47) est au moins partiellement logé dans la gorge d'étanchéité de sortie (48);
le joint d'étanchéité d'entrée interne (43) coopère avec le noyau interne de connecteur (30) et le corps de connecteur (10) pour former un premier joint;
le joint d'étanchéité de sortie interne (47) coopère avec le noyau interne de connecteur (30) et le corps de connecteur (10) pour former un second joint;
l'entrée interne (31) forme un angle en L sur toute sa longueur; et la sortie interne (32) forme également un angle en L sur toute sa longueur;
l'entrée interne (31) est conçue pour diriger l'eau provenant de l'entrée d'eau (11) du corps de connecteur vers le filtre (60) lorsque le système de filtration d'eau (100) est en configuration de filtrage; et
la sortie interne (32) est conçue pour diriger l'eau depuis le filtre (60) vers la sortie d'eau (12) du corps de connecteur lorsque le système de filtration d'eau est en configuration de filtrage;
la chicane centrale de connecteur (50) présente un orifice central (54) dans lequel une partie du noyau interne de connecteur (30) est logée, ladite chicane centrale comportant un filetage externe (55) qui est en prise avec un filetage interne (17) du corps de connecteur (10);
**caractérisé en ce que**:
lorsque l'ouverture (41) de l'entrée interne (31) est alignée avec l'entrée (11) du corps de connecteur et que la sortie (46) de la sortie interne (32) est alignée avec la sortie d'eau (12) du corps de connecteur, alors le noyau interne de connecteur (30), l'entrée d'eau (11) et la sortie d'eau (12) du corps de connecteur, ainsi que le joint d'étanchéité d'entrée interne (43) et le joint d'étanchéité de sortie interne (47) forment une structure étanche, de sorte que l'eau entre dans l'entrée interne (31) via l'ouverture (41) depuis l'entrée d'eau (11), pénètre dans le noyau interne (30), puis traverse le filtre (60) et sort du corps de connecteur par la sortie d'eau (12) via la sortie interne (32) et la sortie (46), ouvrant ainsi le circuit d'eau du système de filtration (100) pour former une configuration de filtrage; et
lorsque le noyau interne de connecteur (30) est tourné de telle sorte que l'ouverture (41) de l'entrée interne (31) n'est plus alignée avec l'entrée (11) du corps de connecteur et que la sortie (46) de la sortie interne (32) n'est plus alignée avec la sortie d'eau (12) du corps de connecteur, alors le noyau interne de connecteur (30), le joint d'étanchéité d'entrée interne (43), le joint d'étanchéité de sortie interne (47) et le corps de connecteur (10) forment une structure étanche empêchant l'eau de pénétrer dans le circuit d'eau du noyau interne (30), et le système de filtration d'eau (100) bascule vers la configuration de dérivation,
permettant à l'eau d'entrer dans un vide de dérivation (49) depuis l'entrée d'eau (11), de passer au-dessus d'une portion centrale du noyau interne (30) et de sortir par la sortie d'eau (12) du corps de connecteur, le vide de dérivation (49) étant formé au centre du corps de connecteur (10) et défini par le corps de connecteur (10), le noyau interne de connecteur (30) et la chicane centrale de connecteur (50).

2. Le système de filtration d'eau selon la revendication 1, dans lequel:
le corps de connecteur (10) définit une cavité principale (13) du corps de connecteur;
le corps de connecteur (10) comprend une saillie annulaire disposée au sommet de la cavité principale (13) du corps de connecteur et autour de l'axe central;
le noyau interne de connecteur (30) comprend une pluralité de saillies de support de rotation internes (37) disposées au sommet du noyau interne autour de l'axe central; et
la pluralité de saillies de support de rotation internes (37) est au moins partiellement disposée dans la saillie annulaire (16).

3. Le système de filtration d'eau selon la revendication 2, dans lequel en outre:
la pluralité de saillies de support de rotation internes (37) définit une pluralité d'interstices de support de rotation internes (38); et
le connecteur (1) est conçu pour diriger l'eau à travers la pluralité d'interstices de support de rotation internes (38) lorsque le système de filtration d'eau (100) est en configuration de dérivation.

4. Le système de filtration d'eau selon la revendication 1, dans lequel en outre:
le corps de connecteur (10) définit une cavité principale (13) du corps de connecteur;
le corps de connecteur (10) comprend une pluralité de rebords s'étendant vers l'intérieur (14) disposés à proximité de la base du corps de connecteur (10);
le filtre (60) comprend une pluralité de rebords s'étendant vers l'extérieur (73) disposés à proximité de la partie supérieure du filtre (60);
les rebords s'étendant vers l'intérieur (14) sont conçus pour s'engager avec les rebords s'étendant vers l'extérieur (73) du filtre (60) lorsque le filtre (60) est entièrement monté dans le connecteur (1).

5. Le système de filtration d'eau selon la revendication 1, dans lequel:
le corps de connecteur (10) définit une cavité principale (13) du corps de connecteur;
le corps de connecteur (10) comprend un élément de butée (18) disposé au sommet de la cavité principale (13) du corps de connecteur; et
l'élément de butée (18) est conçu pour limiter la rotation du noyau interne de connecteur (30) à l'intérieur du corps de connecteur (10) entre 60 et 120 degrés.

6. Le système de filtration d'eau selon la revendication 2, dans lequel:
la sortie interne (32) comprend une cavité de réception d'un embout de filtre (45) disposée au fond du noyau interne de connecteur (30) le long de l'axe central;
le fond du noyau interne de connecteur (30) définit une pluralité de cavités d'accouplement (39) entourant la cavité de réception de l'embout de filtre (45); et
l'entrée interne (31) comprend une sortie d'entrée interne (42) disposée au fond du noyau interne de connecteur (30) entre au moins deux des cavités d'accouplement (39).

7. Le système de filtration d'eau selon la revendication 6, dans lequel:
le filtre (60) comprend un couvercle terminal (70) et un embout de filtre (92);
le couvercle terminal (70) comprend une ouverture centrale (72) le long de l'axe central, une pluralité de saillies d'accouplement de couvercle terminal (74) entourant l'ouverture centrale (72), et une entrée de couvercle terminal (71) disposée entre au moins deux des saillies (74); et
l'embout de filtre (92) est au moins partiellement logé dans l'ouverture centrale (72) du couvercle terminal.

8. Le système de filtration d'eau selon la revendication 7, dans lequel:
la cavité de réception de l'embout de filtre (45) est conçue pour recevoir l'embout de filtre (92);
la pluralité de saillies d'accouplement du couvercle terminal (74) est conçue pour s'engager avec la pluralité de cavités d'accouplement (39); et
l'entrée de couvercle terminal (71) est conçue pour s'aligner avec la sortie d'entrée interne (42) lorsque le filtre (60) est partiellement ou entièrement monté dans le connecteur (1),
un engagement entre la pluralité de saillies d'accouplement du couvercle terminal (74) et la pluralité de cavités d'accouplement (39) étant conçu pour permettre la rotation du noyau interne de connecteur (30) par rotation du filtre (60).

9. Le système de filtration d'eau selon la revendication 1, comprenant en outre un joint d'étanchéité de chicane interne (33) et un joint d'étanchéité de filtre interne (35), dans lequel:
le noyau interne de connecteur (30) comprend une gorge d'étanchéité de chicane interne (34) et une gorge d'étanchéité de filtre interne (36);
le joint d'étanchéité de chicane interne (33) est au moins partiellement logé dans la gorge d'étanchéité de chicane interne (34);
le joint d'étanchéité de chicane interne (33) coopère avec le noyau interne de connecteur (30) et la chicane centrale de connecteur (50) pour former un premier joint^{;}
le joint d'étanchéité de filtre interne (35) est au moins partiellement logé dans la gorge d'étanchéité de filtre interne (36); et
lorsque le filtre (60) est entièrement monté dans le connecteur (1), le joint d'étanchéité de filtre interne (35) coopère avec le noyau interne de connecteur (30) et le filtre (60) pour former un second joint.

10. Le système de filtration d'eau selon la revendication 1, dans lequel:
la sortie interne (32) comprend une cavité de réception d'un embout de filtre (92) autour de l'axe central;
le filtre (60) comprend un embout de filtre (92);
l'embout de filtre (92) est disposé dans la cavité de réception (45) de l'embout de filtre lorsque le filtre (60) est entièrement monté dans le connecteur (1),
et comprenant en outre un joint d'étanchéité supérieur de sortie d'embout de filtre, dans lequel:
l'embout de filtre (92) comprend une gorge d'étanchéité supérieure de sortie;
le joint d'étanchéité supérieur de sortie est au moins partiellement logé dans cette gorge; et
le joint d'étanchéité supérieur de sortie coopère avec une surface intérieure du noyau interne de connecteur (30) et avec l'embout de filtre (92) pour former un joint lorsque le filtre (60) est monté dans le connecteur (1).

11. Le système de filtration d'eau selon la revendication 1, comprenant en outre un ensemble de raccordement rapide d'entrée (21) et un ensemble de raccordement rapide de sortie (22), dans lequel en outre:
l'ensemble de raccordement rapide d'entrée (21) est conçu pour être installé dans l'entrée d'eau (11) du corps de connecteur;
l'ensemble de raccordement rapide de sortie (22) est conçu pour être installé dans la sortie d'eau (12) du corps de connecteur;
l'ensemble de raccordement rapide d'entrée (21) comprend un premier embout fileté, un premier joint torique en O-, une première chicane et une première griffe de connexion rapide; et
l'ensemble de raccordement rapide de sortie (22) comprend un second embout fileté, un second joint torique en O-, une seconde chicane et une seconde griffe de connexion rapide.
